Europäisches Patentamt

European Patent Office

Office européen des brevets

(11) Veröffentlichungsnummer: **0 306 681**
**A1**

## (12) EUROPÄISCHE PATENTANMELDUNG

(21) Anmeldenummer: **88112084.4**

(22) Anmeldetag: **27.07.88**

(51) Int. Cl.⁴: **F16B 13/06**

(30) Priorität: **10.09.87 DE 3730353**

(43) Veröffentlichungstag der Anmeldung:
**15.03.89 Patentblatt 89/11**

(84) Benannte Vertragsstaaten:
**CH DE FR GB LI**

(71) Anmelder: **HILTI Aktiengesellschaft**

**FL-9494 Schaan(LI)**

(72) Erfinder: **Gschwend, Peter**
**Jedergasse**
**FL-9487 Gamprin(LI)**
Erfinder: **Breuss, Manfred**
**Kapfstrasse 36**
**A-6800 Feldkirch(AT)**

(74) Vertreter: **Wildi, Roland**
**Hilti Aktiengesellschaft Patentabteilung**
**FL-9494 Schaan(LI)**

(54) **Verfahren zum Verankern eines Spreizdübels.**

(57) Bei der Verankerung eines aus Spreizhülse (1) und Spreizkonus (2) bestehenden Spreizdübels wird zunächst die Spreizhülse (1) mittels gesonderter Mittel im Bohrloch (9a) mechanisch befestigt. Diese gesonderten Mittel bestehen aus Segmenten (4), welche mittels eines Spreizkörpers (7) aufgeweitet und im Bohrloch (9a) verankert werden. Die Segmente (4) stehen über Stege (4b) in Verbindung mit der Spreizhülse (1). Die Spreizhülse (1) ist somit gegen axiales Verschieben gesichert. Dieses Befestigen der Spreizhülse (1) erfolgt vor dem Aufweiten der Spreizhülse (1).

Fig.2

Fig.3

## Verfahren zum Verankern eines Spreizdübels

Die Erfindung betrifft ein Verfahren zum Verankern eines Spreizdübels mit einer radial aufweitbaren Spreizhülse und einem unter Aufweiten der Spreizhülse relativ dazu axial verschiebbaren, Mittel zur Lastaufnahme aufweisenden Lastangriffsteil.

Spreizdübel der genannten Art weisen bei angreifender Zugbelastung ein Nachspreizverhalten auf und werden deshalb vor allem im mittleren und schweren Lastbereich eingesetzt. Beim Nachspreizen nimmt die radiale Aufweitung der Spreizhülse und damit auch der Verankerungswert des Spreizdübels zu. Um ein Aufweiten der Spreizhülse zu ermöglichen, muss diese im Bohrloch gegen axiales Verschieben gesichert werden.

Bei einer aus der DE-OS 2 205 289 bekannten Lösung erfolgt dies dadurch, dass die Spreizhülse mittels einer Klebeverbindung im Bohrloch festgelegt wird. Diese Lösung weist jedoch verschiedene Nachteile auf. So muss für das Zustandekommen einer Klebeverbindung das Bohrloch vor dem Setzen des Dübels besonders sorgfältig gereinigt werden. Ausserdem erfordert jede Klebeverbindung bis zu ihrem Aushärten eine bestimmte Wartezeit, während der der Dübel noch nicht belastet werden darf.

Der Erfindung liegt die Aufgabe zugrunde, zur Erzielung einer sofortigen Belastbarkeit ein Verankerungsverfahren und einen zur Durchführung dieses Verfahrens geeigneten Spreizdübel zu schaffen.

Gemäss der Erfindung wird dies dadurch erreicht, dass die Spreizhülse vor dem Aufweiten durch gesonderte Mittel im Bohrloch mechanisch befestigt wird.

Eine mechanische Befestigung der Spreizhülse im Bohrloch erlaubt eine sofortige Belastbarkeit des Spreizdübels und stellt bezüglich der vorgängigen Reinigung des Bohrloches geringere Anforderungen. Da die gesonderten Mittel in erster Linie der Befestigung der Spreizhülse im Bohrloch dienen, übernehmen diese nur einen Bruchteil der bei einer Zugbelastung des Spreizdübels auftretenden Last. Die gesonderten Mittel können somit wesentlich schwächer dimensioniert werden als beispielsweise die Spreizhülse selbst.

Eine zweckmässige Ausführung besteht darin, dass die gesonderten Mittel als radial aufweitbare Segmente ausgebildet sind. Beim Aufweiten der Segmente kommen diese in Berührung mit der Bohrlochwandung und werden dadurch form- oder reibschlüssig festgelegt. Die radial aufweitbaren Segmente können sich über den gesamten Umfang oder auch nur über einen Teil des Umfanges erstrecken.

Die Segmente dienen zum axialen Festlegen der Spreizhülse. Die Segmente sind daher vorteilhafterweise mit der Spreizhülse verbunden. Diese Verbindung kann beispielsweise durch Kleben, Löten oder Schweissen erfolgen. Ausserdem können die Segmente und die Spreizhülse auch formschlüssig ineinandergreifen.

Zweckmässigerweise sind die Segmente durch das Lastangriffsteil aufweitbar. Dieses Aufweiten der Segmente kann beispielsweise durch weiteres Eintreiben eines aus dem Bohrloch ragenden Lastangriffsteils oder durch axiales Verschieben des Lastangriffsteils entgegen der Setzrichtung erfolgen.

Eine weitere vorteilhafte Ausführung besteht darin, dass die Segmente durch die Spreizhülse aufweitbar sind. Dieses Aufweiten kann beispielsweise durch ein axiales Verschieben der Spreizhülse entgegen der Setzrichtung erfolgen. Durch das Aufweiten der Segmente wird die Spreizhülse axial festgelegt, so dass bei einer Zugbelastung am Lastangriffsteil die Spreizhülse selbst aufgeweitet wird.

Eine zweckmässige Ausführung besteht auch darin, dass die Segmente durch ein axial verschiebbares Spreizelement aufweitbar sind. Ein solches Spreizelement kann beispielsweise als Spreizkonus ausgebildet werden. Das Verschieben des Spreizelementes kann von aussen mittels eines Setzdornes oder über das Lastangriffsteil erfolgen. Ein separates Spreizelement für die Segmente ermöglicht eine optimale Anpassung an die Geometrie der Segmente.

Das axiale Festlegen der Segmente kann rein reibschlüssig erfolgen. Da die Reibung jedoch vom Zustand des Bohrloches bezüglich Reinigung und Oberflächengüte abhängig ist, lässt sich der Verankerungswert der Segmente nicht genau vorausbestimmen. Für eine sichere Befestigung der Segmente ist es daher vorteilhaft, wenn die Segmente an ihrer Mantelfläche vorstehende Profilierungen aufweisen. Diese Profilierungen werden beim Aufweiten der Segmente in die Bohrlochwandung eingedrückt, so dass eine formschlüssige Verbindung zwischen den Segmenten und der Bohrlochwandung entsteht. Eine solche Verbindung ist weitgehend unabhängig vom Oberflächenzustand des Bohrloches und ermöglicht eine Befestigung der Segmente auch bei Toleranzabweichungen des Bohrlochdurchmessers.

Eine weitere zweckmässige Ausführung besteht darin, die gesonderten Mittel zur Befestigung der Spreizhülse als in Durchtrittsöffnungen der Spreizhülse gelagerte Formschlusselemente auszubilden. Solche Formschlusselemente können beispielsweise die Form von Stiften oder Kugeln aufweisen. Diese Formschlusselemente werden vor dem Aufweiten der Spreizhülse in die Bohrlochwandung eingedrückt.

Die Erfindung soll nachstehend anhand der sie beispielsweise wiedergebenden Zeichnungen näher erläutert werden. Es zeigen:

Fig. 1 einen Spreizdübel, im Längsschnitt entlang der Linie I-I in Fig. 3,

Fig. 2 den Spreizdübel gemäss Fig. 1, nach dem axialen Festlegen der Spreizhülse, im Längsschnitt entlang der Linie II-II in Fig. 3,

Fig.3 einen Querschnitt durch den in Fig. 2 dargestellten Spreizdübel, entlang der Linie III-III,

Fig. 4 den Spreizdübel gemäss Fig. 1, nach dem axialen Festlegen und Aufweiten der Spreizhülse,

Fig. 5 einen weiteren, in ein Bohrloch eingesetzten Spreizdübel, vor dem axialen Festlegen der Spreizhülse, im Längsschnitt entlang der Linie V-V in Fig. 7,

Fig. 6 den Spreizdübel gemäss Fig. 5, nach dem axialen Festlegen der Spreizhülse, im Längsschnitt entlang der Linie VI-VI in Fig. 7,

Fig. 7 einen Querschnitt durch den in Fig. 6 dargestellten Spreizdübel entlang der Linie VII-VII,

Fig. 8 einen Längsschnitt durch den Spreizdübel gemäss Fig. 5 und 6, nach dem axialen Festlegen und Aufweiten der Spreizhülse,

Fig. 9 einen weiteren Spreizdübel, in ungespreiztem Zustand,

Fig. 10 den Spreizdübel gemäss Fig. 9, nach dem Befestigen der Spreizhülse,

Fig. 11 den Spreizdübel gemäss Fig. 9 und 10 in verankertem Zustand,

Fig. 12 einen weiteren Spreizdübel, im Ausgangszustand,

Fig. 13 den Spreizdübel gemäss Fig. 12 in verankertem Zustand

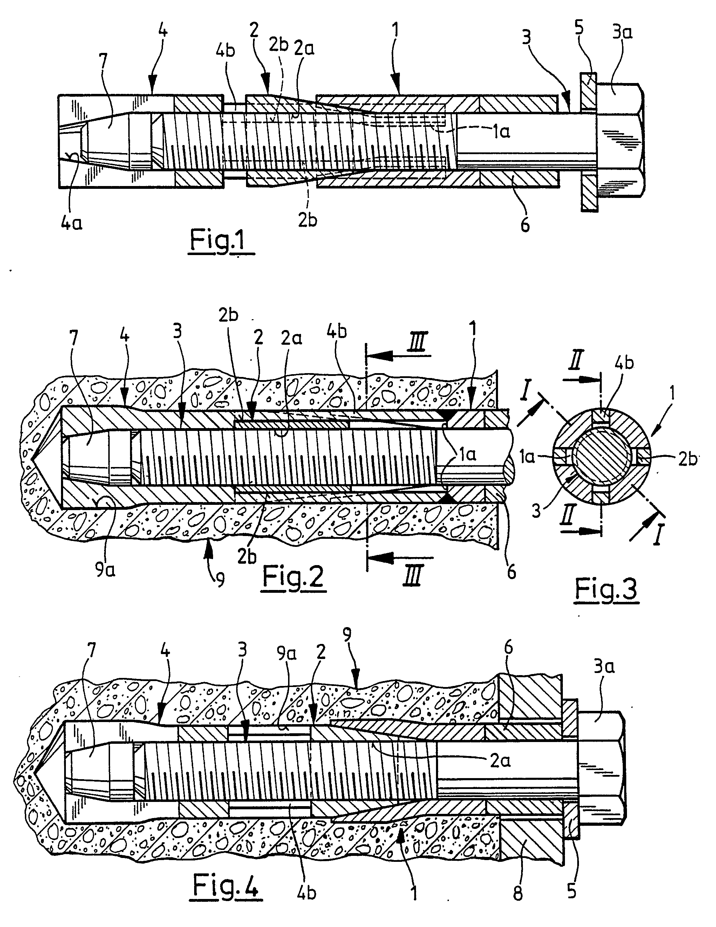

Der aus den Fig. 1 bis 4 ersichtliche Spreizdübel besteht aus einer Spreizhülse 1 und einem damit zusammenwirkenden Spreizkonus 2. Die Spreizhülse 1 weist zur radialen Aufweitbarkeit vom vorderen Ende ausgehende Längsschlitze 1a auf. Der Spreizkonus 2 ist mit einem Innengewinde 2a sowie vier über den Umfang gleichmässig verteilt angeordneten Längsnuten 2b versehen. Der Spreizkonus 2 ist über das Innengewinde 2a mit einem Gewindebolzen 3 verbunden, der an seinem rückwärtigen Ende einen Sechskantkopf 3a aufweist. Der Spreizkonus 2 und der Gewindebolzen 3 bilden zusammen das Lastangriffsteil. Eine aus radial aufweitbaren Segmenten 4 bestehende Hülse weist einen Innenkonus 4a auf und ist über in den Längsnuten 2b verlaufende Stege 4b mit der Spreizhülse 1 verbunden.

Zwischen dem Sechskantkopf 3a und der Spreizhülse 1 sind eine Unterlagsscheibe 5 sowie eine Distanzbüchse 6 angeordnet. Ein kegelstumpfförmiges Spreizelement 7 dient zum radialen Aufweiten der Segmente 4. Das Spreizelement 7 ist mittels des Gewindebolzens 3 in Längsrichtung in die in Fig. 2 und 4 dargestellte Lage vortreibbar. Dabei weitet das Spreizelement 7 die Segmenthülse 4 radial auf und verankert diese somit in einem Bohrloch 9a eines Aufnahmematerials 9. Durch das Verbinden der Segmente 4 über die Stege 4b mit der Spreizhülse 1 wird dadurch auch die Spreizhülse 1 axial festgelegt. Beim nachfolgenden Einziehen des Spreizkonus 2 in die Spreizhülse 1 mittels des Gewindebolzens 3 wird die Spreizhülse 1 ebenfalls radial aufgeweitet und gemäss Fig. 4 im Bohrloch 9a des Aufnahmematerials 9 verankert. Die Lage des Spreizelementes 7 wird dabei nicht verändert. Der Spreizdübel dient dabei zur Befestigung eines Bauteils 8 am Aufnahmematerial 9. Bei zunehmender Zugbelastung des Spreizdübels am Gewindebolzen 3 wird der Spreizkonus 2 noch weiter in die Spreizhülse 1 hineingezogen und bewirkt dabei eine Nachspreizung der Spreizhülse 1.

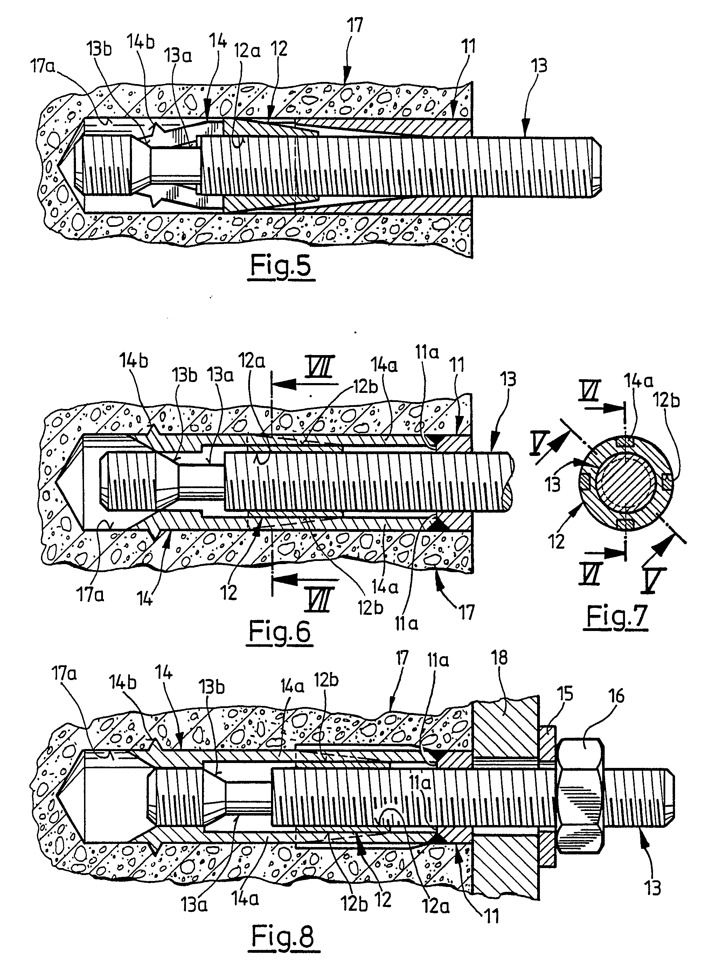

Der aus den Fig. 5 bis 8 ersichtliche Spreizdübel besteht aus einer Spreizhülse 11 und einem in die Spreizhülse 11 einziehbaren Spreizkonus 12. Die Spreizhülse 11 ist zur radialen Aufweitbarkeit mit Längsschlitzen 11a versehen. Der Spreizkonus 12 weist ein Innengewinde 12a sowie gleichmässig über den Umfang verteilte Längsnuten 12b auf. Ein Gewindebolzen 13 ist in den Spreizkonus 12 eingeschraubt und bildet somit zusammen mit dem Spreizkonus 12 das Lastangriffsteil. Der Gewindebolzen 13 weist an seinem vorderen Ende eine Einschnürung 13a sowie zum vorderen Ende hin daran anschliessend eine Auflaufschräge 13b auf. Die Einschnürung 13a des Gewindebolzens 13 wird von fingerartigen Segmenten 14 umgeben, welche über in den Längsnuten 12b verlaufende Stege 14a mit der Spreizhülse 11 verbunden sind. Die Segmente 14 weisen auf ihrer Aussenseite eine vorstehende Profilierung 14b auf.

In Fig. 6 ist der Gewindebolzen 13 gegenüber der Spreizhülse 11 entgegen der Setzrichtung verschoben worden. Die Auflaufschräge 13b bewirkt dabei ein Auseinanderspreizen der Segmente 14, wobei die Profilierungen 14b in die Wandung eines Bohrloches 17a in einem Aufnahmematerial 17 eingedrückt werden. Eine radiale Aufweitung der Spreizhülse 11 ist dabei jedoch noch nicht erfolgt.

In Fig. 8 ist der Gewindebolzen 13 gegenüber der Spreizhülse 11 entgegen der Setzrichtung weiter verschoben worden. Dies kann beispielsweise durch direktes Aufbringen einer Zugkraft am Gewindebolzen 13 oder mit Hilfe einer Sechskantmutter 16 erfolgen, welche sich über eine Unterlagsscheibe 15 an einem zu befestigenden Bauteil 18 abstützt. Durch das Einziehen des Spreizkonus 12 in die Spreizhülse 11 ist nun auch die Spreizhülse 11 radial aufgeweitet und im Bohrloch 17a verankert worden. Ein Verschieben der Spreizhülse 11 wird dabei durch die zuvor erfolgte Befestigung mittels der Segmente 14 verhindert.

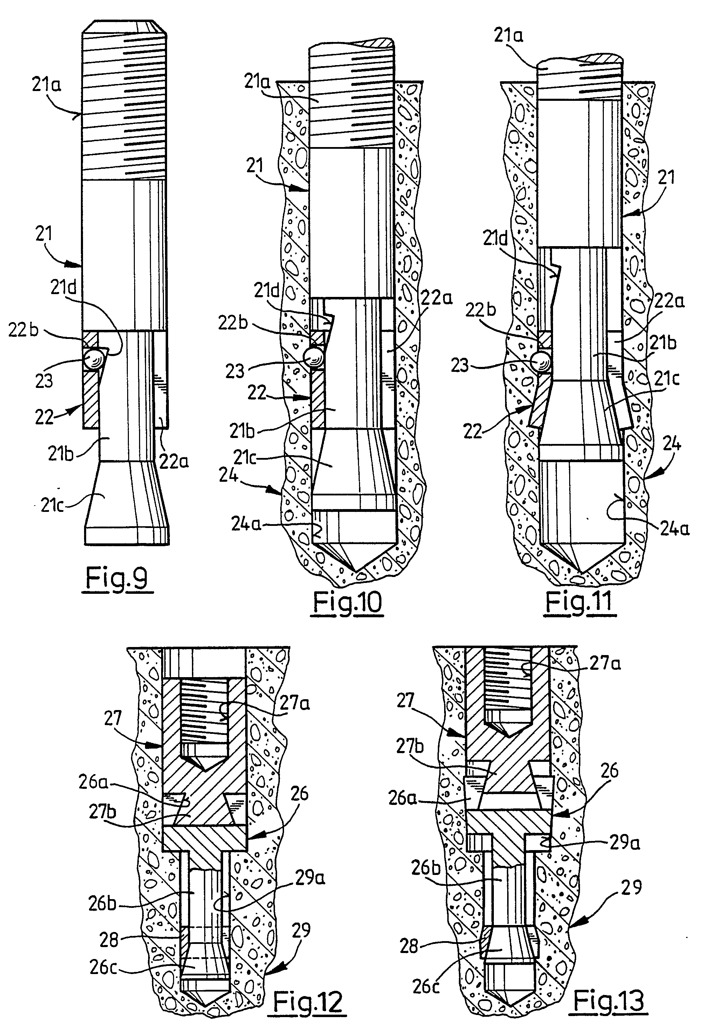

Der aus den Fig. 9 bis 11 ersichtliche Spreizdübel besteht aus einem als Lastangriffsteil dienenden Ankerbolzen 21 und einer Spreizhülse 22. Der Ankerbolzen 21 weist an seinem rückwärtigen Ende ein Gewinde 21a auf und ist im vorderen Endbereich mit einer Einschnürung 21b versehen. Anschliessend an die Einschnürung 21b weist der Ankerbolzen 21 einen sich zum vorderen Ende erweiternden Spreizkonus 21c auf. Im Bereich der Einschnürung 21b ist der Ankerbolzen 21 ausserdem mit einer Auflauframpe 21d versehen. Die Spreizhülse 22 weist einen Längsschlitz 22a auf und ist radial aufweitbar. In einer Durchtrittsöffnung 22b ist eine Kugel 23 radial verschiebbar gelagert.

In der in Fig. 9 dargestellten Ausgangslage stützt sich die Kugel 23 an der Auflauframpe 21d ab. Die Kugel 23 überragt dabei die Aussenkontur der Spreizhülse 22 nicht. Wird der Ankerbolzen 21 gegenüber der Spreizhülse 22 in die in Fig. 10 dargestellte Lage verschoben, so bewirkt das Auflaufen der Kugel 23 an der Auflauframpe 21d ein radiales Verschieben der Kugel 23. Die Kugel 23 wird dadurch in eine die Spreizhülse 22 radial überragende Lage gebracht, und schafft einen formschlüssigen Eingriff mit der Wandung eines Bohrloches 24a in einem Aufnahmematerial 24. Die Spreizhülse 22 wird somit im Aufnahmematerial 24 befestigt. Bei einem weiteren axialen Verschieben des Ankerbolzens 21 gegenüber der Spreizhülse 22 in die in Fig. 11 dargestellte Lage wird die Spreizhülse 22 durch den Spreizkonus 21c des Ankerbolzens 21 radial aufgeweitet. Die Kugel 23 wird durch den zylindrischen Abschnitt der Einschnürung 21b wird nicht mehr weiter nach aussen verschoben.

Der aus Fig. 12 und 13 ersichtliche Spreizdübel besteht aus einer Spreizhülse 26 und einem Lastangriffsteil 27. Das Lastangriffsteil 27 weist ein Innengewinde 27a sowie am in Setzrichtung vorderen Ende einen sich in Setzrichtung erweiternden Konus 27b auf. Die Spreizhülse 26 ist an ihrem rückwärtigen Ende mit einer sich entsprechend dem Spreizkonus 27b entgegen der Setzrichtung verengenden Bohrung 26a versehen. Die Spreizhülse 26 weist ferner einen im Durchmesser reduzierten Schaft 26b, sowie einen sich in Setzrichtung erweiternden Spreizkörper 26c auf. Der Spreizkörper 26c wird von einem in Längsrichtung geschlitzten, ringförmigen Segment 28 umgeben.

Der Spreizdübel ist in ein im Durchmesser abgestuftes Bohrloch 29a eines Aufnahmematerials 29 eingesetzt. In dem in Fig. 12 dargestellten Ausgangszustand ist noch keine Verspreizung des Dübels im Bohrloch 29a erfolgt.

Bei einer Verschiebung des Lastangriffsteils 27 entgegen der Setzrichtung wird zunächst die Spreizhülse 26 über die formschlüssige Verbindung zwischen dem Spreizkonus 27b und der Bohrung 26a mitgenommen. Das sich an der Wandung des Bohrloches 29a abstützende Segment 28 wird dabei radial aufgeweitet. Somit wird die Spreizhülse 26 im Bohrloch 29a axial festgelegt. Bei weiterem Aufbringen einer Zugkraft am Lastangriffsteil 27 erfolgt eine Relativverschiebung des Lastangriffsteils 27 gegenüber der Spreizhülse 26. Dabei wird das rückwärtige, mit der Bohrung 26a versehene Teil der Spreizhülse 26 radial aufgeweitet und im Bohrloch 29a verspreizt. Der resultierende Verankerungswert des Dübels ergibt sich aus der Summe der Verspreizung des Segmentes 28 und der Aufweitung der Spreizhülse 26 im Bohrloch 29a. Durch das zuvor erfolgte Befestigen der Spreizhülse 26 im Bohrloch 29a mittels des Segementes 28 wird die Nachspreizung des Dübels sichergestellt.

## Ansprüche

1. Verfahren zum Verankern eines Spreizdübels mit einer radial aufweitbaren Spreizhülse (1, 11, 22, 26) und einem unter Aufweiten der Spreizhülse (1, 11, 22, 26) relativ dazu axial verschiebbaren, Mittel zur Lastaufnahme aufweisenden Lastangriffsteil (2, 3, 12, 13, 21, 27), **dadurch gekennzeichnet,** dass die Spreizhülse (1, 11, 22, 26) vor dem Aufweiten durch gesonderte Mittel im Bohrloch (9a, 17a, 24a, 29a) mechanisch befestigt wird.

2. Vorrichtung zur Durchführung des Verfahrens nach Anspruch 1, dadurch gekennzeichnet, dass die gesonderten Mittel als radial aufweitbare Segmente (4, 14, 28) ausgebildet sind.

3. Vorrichtung nach Anspruch 2, dadurch gekennzeichnet, dass die Segmente (4, 14) mit der Spreizhülse (1, 11) verbunden sind.

4. Vorrichtung nach Anspruch 2 oder 3, dadurch gekennzeichnet, dass die Segmente (4, 14) durch das Lastangriffsteil (2, 3, 12, 13) aufweitbar sind.

5. Vorrichtung nach Anspruch 2, dadurch gekennzeichnet, dass die Segmente (28) durch die Spreizhülse (26) aufweitbar sind.

6. Vorrichtung nach Anspruch 2 oder 3, dadurch gekennzeichnet, dass die Segmente (4) durch ein axial verschiebbares Spreizelement (7) aufweitbar sind.

7. Vorrichtung nach einem der Ansprüche 2 bis 6, dadurch gekennzeichnet, dass die Segmente (14) an ihrer Mantelfläche vorstehende Profilierungen (14b) aufweisen.

8. Vorrichtung zur Durchführung des Verfahrens nach Anspruch 1, dadurch gekennzeichnet, dass die gesonderten Mittel zur Befestigung der Spreizhülse (22) als in Durchtrittsöffnungen (22b) der Spreizhülse (22) gelagerte Formschlusselemente (23) ausgebildet sind.

Fig.1

Fig.2

Fig.3

Fig.4

Fig.5

Fig.6

Fig.7

Fig.8

Fig.9

Fig.10

Fig.11

Fig.12

Fig.13

Europäisches
Patentamt

# EUROPÄISCHER RECHERCHENBERICHT

Nummer der Anmeldung

EP 88 11 2084

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 321 065 (HILTI AG) <br> * Figuren 1,2 * <br> --- | 1-3 | F 16 B 13/06 |
| A | EP-A-0 200 676 (HILTI AG) <br> * Zusammenfassung; Figuren 7,13 * <br> --- | 1,8 | |
| A | FR-A-2 360 007 (MACHTLE) <br> ----- | | |

RECHERCHIERTE
SACHGEBIETE (Int. Cl.4)

F 16 B 13/00

Der vorliegende Recherchenbericht wurde für alle Patentansprüche erstellt

| Recherchenort | Abschlußdatum der Recherche | Prüfer |
|---|---|---|
| BERLIN | 30-11-1988 | SCHAEFFLER C.A.A. |